# EUROPÄISCHE PATENTSCHRIFT

(11) **EP 2 482 991 B1**
(45) Veröffentlichungstag und Bekanntmachung des Hinweises auf die Patenterteilung: **21.10.2015**
(21) Anmeldenummer: 10776536.4
(22) Anmeldetag: 23.09.2010
(51) Int. Cl.: B05B 7/02, B05B 7/24, B05B 12/00, B05B 15/06, B05B 7/08, B05B 7/12, B05B 9/04

(54) **TRANSPORTABLES FARBSPRÜHGERÄT**
PORTABLE PAINT SPRAYING DEVICE
APPAREIL DE PULVÉRISATION DE PEINTURE TRANSPORTABLE

(30) Priorität: 02.10.2009 DE 102009048022
(43) Veröffentlichungstag der Anmeldung: 08.08.2012
(73) Patentinhaber: J. Wagner GmbH, 88677 Markdorf (DE)
(72) Erfinder: KRAYER, Elmar, 88085 Langenargen (DE); GÖHRING, Alfred, 88682 Salem (DE); JELTSCH, Thomas, 88048 Friedrichshafen (DE); ULBRICH, Jens, 88048 Friedrichshafen (DE); WELTE, Christoph, 88662 Überlingen (DE)
(74) Vertreter: Otten, Herbert
(86) Internationale Anmeldenummer: PCT/DE2010/001117
(87) Internationale Veröffentlichungsnummer: WO 2011/038712

(56) Entgegenhaltungen:
- DE-B- 1 047 686
- DE-U1-202007 005 381
- DE-U1-202007 017 944
- US-A- 5 676 310
- US-A1- 2005 279 865
- "Originalbetriebsanleitung WallPerfect W 985 E D/GB/F/NL", INTERNET CITATION, 1. März 2010 (2010-03-01), Seite 66PP, XP007917052, Gefunden im Internet: URL:http://www.wagner-group.de/portal/down load.php?verzeichnis=portal%2Fd ownloadcenter%2Fdateien%2FHeimwerker%2FCol or%2FManuals%2F&src=portal% 2Fdownloadcenter%2Fdateien%2FHeimwerker%2F Color%2FManuals%2F2309671_W 985E_D_GB_F_NL_032010-web2.PDF&system_id=3 47974&root=360 [gefunden am 2011-02-08]

## Beschreibung

Die Erfindung betrifft ein Transportables Farbsprühgerät nach Anspruch 1.

Im Stand der Technik existiert eine Vielzahl von luftgetriebenen Farbsprühgeräten, welche in der Regel ein Farbreservoir, eine Vorrichtung zur Luftstromerzeugung, beispielsweise einen Kompressor oder ein Gebläse und eine Sprühpistole umfassen. Aus dem Produktportfolio der Anmelderin sind hierbei exemplarisch die Wagner FC9900 PC Sprühstation sowie die Wagner W860 Heimwerker-Sprühstation zu nennen.

Es existieren stetig Bestrebungen, die Geräte hinsichtlich ihres Einsatzspektrums zu verbessern, und dabei eine kompakte und leicht zu handhabende Gerätegestaltung zu erreichen.

Auch aus der DE 10 2007 022 980 A1 ist eine Anordnung zur Aufbringung von Anstrichen bekannt, welche eine Farbrolle mit Farbe versorgt. Eine Sprühpistole ist nur in der Zeichnung angedeutet.

Auch die DE 10 2008 000 400 A1 betrifft ein transportables Farbspritzgerät, welches einen kompakten Aufbau aufweist.

Nachteilig an all den Geräten zum Stand der Technik ist, dass entweder ein Farbreservoir direkt an der Sprühvorrichtung angebracht werden muss, oder die Farbe über eine separat zu bedienende Vorrichtung zur Sprühvorrichtung gefördert wird, so dass ein Benutzer im Gebrauch stets das Gewicht der Farbe mitbewegen muss, oder das Basisgerät selbst bei sich trägt. Spätestens bei Arbeiten auf einer Leiter ist dies als oftmals störend einzustufen.

Aufgabe der Erfindung ist es somit, ein transportables Farbsprühgerät zur Verfügung zu stellen, welches die Nachteile des Standes der Technik vermeidet.

Diese Aufgabe wird durch ein erfindungsgemäßes Gerät nach dem Gegenstand des Patentanspruchs 1 gelöst. Vorteilhafte Weiterbildungen sowie zweckmäßige Ausgestaltungen sind in den abhängigen Ansprüchen angegeben.

Im Einzelnen betrifft die Erfindung ein transportables Farbsprühgerät, wobei das Farbsprühgerät eine Basisstation mit einer Antriebseinheit und eine rohrartige Lanze mit einem ersten Kanal zum Durchleiten der Farbe und einen zweiten Kanal zum Durchleiten des Luftstroms umfasst, wobei die Antriebseinheit eine erste Arbeitseinheit zur Erzeugung eines Luftstroms, eine zweite Arbeitseinheit zur Erzeugung eines Farbstroms einem Saugschlauch zum Ansaugen von flüssiger Farbe und eine Kontrolleinheit zum Steuern bzw. Regeln der ersten Einheit und der zweiten Einheit umfasst, wobei die Lanze an einem ersten Ende eine Bedieneinheit aufweist, wobei die Lanze an einem zweiten Ende einen Sprühkopf aufweist, wobei die Lanze über eine Luftleitung mit der ersten Arbeitseinheit verbunden ist, wobei die Lanze über eine Farbleitung mit der zweiten Arbeitseinheit verbunden ist, wobei zwischen der Bedieneinheit und dem Sprühkopf eine Grifffläche angeordnet ist, an welcher die Lanze von einem Nutzer greifbar ist, wobei die Bedieneinheit sowohl wenigstens eine der Arbeitseinheiten der Antriebseinheit steuert, als auch den Austritt von Farbe an dem entfernt von der Bedieneinheit liegenden Sprühkopf bedient.

Auf diese Weise kann ein Benutzer sowohl die Bedienung eines Sprühkopfes als auch die Steuerung einer Basisstation leicht während der Arbeit ausführen, ohne die Arbeitsposition verlassen zu müssen. Ein entsprechend langer Anschlussschlauch zwischen Basisstation und Sprüheinheit stellt einen der Anwendung entsprechenden Aktionsradius zur Verfügung.

Eine Weiterbildung ist dadurch gekennzeichnet, dass die Bedieneinheit die Arbeitseinheit zur Erzeugung eines Farbstroms steuert, wobei sie eine erste Steuerungsvorrichtung insbesondere einen Druckschalter und einen Steüerschlauch umfasst, in welchem insbesondere durch ein Bedienen eines Abzugs der Bedieneinheit ein erhöhter Steuerluftdruck erzeugbar ist und wobei die Kontrolleinheit insbesondere einen in der Basisstation angeordneten elektropneumatischen Taster umfasst, an welchen der Steuerschlauch angeschlossen ist und welcher durch den Steuerluftdruck betätigt wird, und dass die Bedieneinheit ein im Sprühkopf gelagertes Farbventil bedient, wobei das Farbventil insbesondere eine durch eine Nadel verschließbare Farbaustrittsöffnung umfasst, wobei hierfür eine Bedienvorrichtung insbesondere als mechanische Bewegungs- und Kraftübertragungsvorrichtung ausgebildet ist, mit welcher eine Bewegung eines Abzugs der Bedieneinheit in eine Bewegung der Nadel umsetzbar ist, wobei die Bewegungs- und Kraftübertragungsvorrichtung insbesondere einen Zug, vorzugsweise einen Seilzug oder einen Bowdenzug umfasst, welcher in seiner Länge insbesondere verstellbar ist, wobei insbesondere der Bewegungs- und Kraftübertragungsmechanismus insbesondere auch einen Hebel umfasst, an welchem der Zug, insbesondere Seilzug oder der Bowdenzug angreift und welcher schwenkbar mit dem Sprühkopf verbunden ist.

Überdies ist in einem transportablen Farbsprühgerät nach der Erfindung eventuell vorgesehen, dass bei einem vollständigen betätigen eines Abzugs der Bedieneinheit zunächst der Sprühkopf bedient und für einen Austritt der Farbe geöffnet wird und anschließend wenigstens eine der Arbeitseinheiten der Antriebseinheit gestartet wird.

Eine weitere zweckmäßige Ausgestaltung der Erfindung umfasst, dass bei einem Loslassen eines vollständig betätigten Abzugs der Bedieneinheit zunächst die wenigstens eine Arbeitseinheit der Antriebseinheit gestoppt wird und anschließend der Sprühkopf für den Austritt von Farbe geschlossen wird.

Eine weitere vorteilhafte Weiterbildung ist dadurch gekennzeichnet, dass die Luftleitung und die Farbleitung, welche die Lanze mit den Arbeitseinheiten der Basisstation verbinden, mit einander verbunden sind, wobei die Farbleitung an der Luftleitung derart geführt ist, dass die Farbleitung relativ zu der Luftleitung verschiebbar ist, wobei Führungsmittel insbesondere als Klammern ausgebildet sind, welche die Luftleitung verschiebesicher umgreifen und die Farbleitung lose umgreifen, wobei die Luftleitung insbesondere in Längsrichtung abwechselnd kleine und große Außendurchmesser aufweist und die Klammer sich an wenigstens einem großen Außendurchmesser gegen ein Verschieben in die Längsrichtung abstützt.

Eine weitere Ausführung ermöglicht, dass die Farbleitung und der Steuerschlauch zwischen der Lanze und der Basisstation als einteiliger Zwillingsschlauch ausgebildet sind, wobei die Farbleitung und der Steuerschlauch insbesondere unterschiedliche Innendurchmesser aufweisen und wobei die Steuerschlauch insbesondere mittels der mit ihm verbundenen Farbleitung an der Luftleitung geführt ist.

Das erfindungsgemäße transportable Farbsprühgerät ist in einer Weiterbildung dadurch gekennzeichnet, dass die erste Arbeitseinheit zur Erzeugung eines Luftstroms als Gebläse ausgebildet ist, welches Umgebungsluft durch einen Luftfilter ansaugt und durch den Luftschlauch und die Lanze bis in den Sprühkopf fördert, dass die zweite Arbeitseinheit zur Erzeugung eines Farbstroms als Pumpe, insbesondere als Schlauchpumpe, ausgebildet ist, und dass die Kontrolleinheit zum Steuern bzw. Regeln der ersten Arbeitseinheit und der zweiten Arbeitseinheit insbesondere einen Wahlschalter für eine Förderleistung der Schlauchpumpe und insbesondere einen Wahlschalter für Betriebsmodi, vorzugsweise Sprühbetrieb und Reinigungsbetrieb umfasst, wobei das Gebläse in einem Reinigungsbetrieb deaktiviert ist und ausschließlich die Pumpe, insbesondere mit höchster Leistung, betrieben wird.

Eine weitere zweckmäßige Ausgestaltung bedingt, dass die Basisstation des Farbsprühgeräts eine Abtropfschale umfasst, in welche die Lanze mit ihrem Sprühkopf einstellbar ist und dass die Abtropfschale zur Reinigung von der Basisstation abnehmbar ist.

Eine überdies weitere zweckmäßige Ausgestaltung umfasst, dass die Basisstation des Farbsprühgeräts im Wesentlichen durch einen Sockelkörper und einen Pylon gebildet ist, wobei die Arbeitseinheiten in dem Sockelkörper aufgenommen sind, wobei der Pylon eine mit Abstand über dem Sockelkörper liegende Plattform und insbesondere zwei Streben umfasst, wobei die Streben die Plattform tragen und mit dem Sockelkörper verbunden sind, wobei die Plattform eine Halteklammer für die Lanze umfasst, wobei die Halteklammer an der Plattform insbesondere schwenkbar um eine horizontale Achse angelenkt ist und wobei die Halteklammer insbesondere ein erstes Kupplungsmittel umfasst, wobei das erste Kupplungsmittel insbesondere als Bohrung ausgebildet ist, wobei das erste Kupplungsmittel mit einem zweiten Kupplungsmittel kuppelbar ist, wobei das zweite Kupplungsmittel an der Lanze angeordnet oder Lanze zugeordnet ist und insbesondere als Stift ausgebildet ist und wobei die Lanze, wenn sie von der Halteklammer gegriffen ist, mit ihrem Sprühkopf insbesondere in der Abtropfschale steht.

Eine zweckmäßige Weiterbildung weißt auf, dass die Wahlschalter der Kontrolleinheit in der Plattform angeordnet sind.

Eine weitere zweckmäßige Weiterbildung weißt auf, dass der Farbschlauch, welcher einen Farbauslass der Basisstation mit einem Farbeinlass des Sprühkopfs verbindet, an dem Farbauslass der Basisstation mit einer höheren Abzugskraft gesichert ist als an dem Farbeinlass des Sprühkopfs.

Überdies ist eine Weiterbildung dadurch gekennzeichnet, dass der Luftfilter insbesondere an einer Oberseite des Sockelkörpers der Basisstation angeordnet ist und von einem Schutzgitter überdeckt wird, wobei das Schutzgitter insbesondere einteilig mit der Abtropfschale ausgebildet ist.

Insbesondere betrifft die Erfindung ein transportables Farbsprühgerät eine Weiterbildung in der das Luftstromvolumen und der Luftdruck am Sprühkopf den HVLP (High Volume Low Pressure) Grenzwerten entspricht und insbesondere einen Druck von ca. 10 psi (ca. 0,7 bar) nicht überschritten wird. Auf die Bestimmungen zur HVLP Technik wird hiermit Bezug genommen.

Das erfindungsgemäße transportable Farbsprühgerät weist insbesondere für den Benutzer wählbare verschiedene Betriebszustände auf, welche je nach Ausbaustufe des Geräts vereinzelt, ergänzend oder vollständig realisiert sein können. Die Betriebszustände betreffen insbesondere folgende Steuerungen der Antriebseinheit bzw. Anordnungen der Gerätebestandteile:
a) Farbsprühbetrieb: Die Farbsprühlanze wird vom Benutzer gehalten, eine Luftfördereinheit, insbesondere ein Gebläse in der Antriebseinheit fördert Luft zur Erzeugung und Auftragung eines Farbnebels, die Arbeitseinheit der Antriebseinheit, welche zur Farbförderung vorgesehen ist, fördert ein definiertes Farbvolumen in vorzugsweise einstellbarer Geschwindigkeit zur Farbsprühlanze, wobei die Arbeitseinheit vorzugsweise als kontinuierlich arbeitende Schlauchpumpe ausgebildet ist.
b) Entleerungsbetrieb: Aus umwelttechnischen Aspekten, zur Kostenersparnis bei Verbrauchsmaterialien und zur vereinfachten Reinigung kann die Arbeitseinheit, welche als Farbpumpe ausgebildet ist, vorzugsweise mit eingeschränkter oder höchster Förderleistung in umgekehrter Förderrichtung betrieben werden, um die im Gerät befindliche Farbe in ein Farbreservoir zurückzuführen. Dies kann bei vom Benutzer gehaltener Lanze oder bei Unterbringung der Lanze in einer Halteklammer an der Basisstation erfolgen. Die Luftfördereinrichtung kann in dieser Betriebsart deaktiviert sein.
c) Reinigungsbetrieb: Der Benutzer kann entweder die Lanze in ein Reinigungsgefäß, vorzugsweise in einen Eimer hineinhalten, oder er kann durch verschwenken der Halteklammer an der Basisstation die Lanze mit ihrem vorderen Ende in eine, von der Basisstation wegzeigende Richtung gehaltert ausrichten, so dass die Lanzenspitze in einen vor der Basisstation aufgestellten Behälter zeigt bzw. hineinragt. Auf der Farbzufuhrseite wird ein Behälter mit Reinigungsflüssigkeit, vorzugsweise Wasser, angeordnet, welche zumindest Teilweise durch den Farbförderweg des Farbsprühgeräts zur Reinigung desselben gefördert werden soll. Die Luftfördereinrichtung ist in dieser Betriebsart deaktiviert. Die Arbeitseinheit zur Farbförderung kann hierbei mit eingeschränkter oder höchster Förderleistung, kontinuierlich oder impulsartig betrieben werden.

In einer bevorzugten Ausgestaltung des transportablen Farbsprühgerätes ist vorgesehen, dass die erste Arbeitseinheit zur Erzeugung eines Luftstroms steuerbar, insbesondere regelbar zur Veränderung des Luftstromflusses ausgebildet ist. Eine Regelung des bereitgestellten Luftstromvolumens ist oftmals zur Verbesserung des Sprühbildes sinnvoll, da sich unterschiedliche verarbeitete Materialien, beispielsweise Wandfarben unterschiedlicher Hersteller, nicht immer mit den identischen Verarbeitungsparametern optimal versprühen lassen. Ein hoher Luftstromfluss führt beispielsweise zu verstärktem Overspray, was eine erhöhte Vernebelung der Farbe in der Umgebung bedeutet. Dem kann durch Verringerung des Luftstromflusses entgegengewirkt werden.

In einer diesbezüglichen Weiterbildung des transportables Farbsprühgerät ist realisiert, dass die Steuerung bzw. Regelung des Luftstromflusses in vorgegebenen Stufen, insbesondere Programmen und/oder stufenlos einstellbar ist, wobei vorzugsweise eine daraus resultierende Steuerung bzw. Regelung der zweiten Arbeitseinheit, insbesondere über die Kontrolleinheit vorgesehen ist.

Die Vorgabe von Steuerungs- bzw. Regelungsstufen für den Luftstromfluss bietet einen erhöhten Bedienkomfort und hilft dem Benutzer, die richtigen Einstellungen zu finden. Überdies können beispielsweise vorgegebene Programme angegeben werden, welche die optimalen Parameter für bestimmte zu versprühende Farben, beispielsweise nach einer Herstellertabelle oder nach Viskositätsdaten beinhalten. Die Möglichkeit einer Einflussnahme der erfassten Einstellung des Luftstromflusses auf die Leistung der zweiten Arbeitseinheit, welche den Farbfluss bereitstellt, nimmt dem Benutzer weiterhin die Aufgabe ab, die bereitgestellte Farbmenge auf den Luftstromfluss manuell abzugleichen.

Selbstverständlich ist es auch vorgesehen, in einer Art "Profimodus" dem Benutzer eine stufenlose Regelung des Luftstromflusses alternativ oder zusätzlich zur Verfügung zu stellen, im individuelle Einstellungen zu ermöglichen.

Eine erfindungsgemäße Ausführung eines transportablen Farbsprühgeräts ist im folgenden Ausführungsbeispiel gegeben. Die Erfindung ist jedoch nicht auf das Ausführungsbeispiel beschränkt. Sie umfasst vielmehr all diejenigen Ausführungen, welche vom erfindungswesentlichen Gedankengang gebrauch machen.

Es zeigen hierbei:
- Fig. 1: ein erfindungsgemäßes Farbsprühgerät in perspektivischer Darstellung.
- Fig. 2: eine Frontansicht der Basisstation.
- Fig. 3: eine Rückansicht der Basisstation.
- Fig. 4: eine Seitenansicht der Sprühlanze.
- Fig. 5: einen schematischen Querschnitt durch das Leitungs- bzw. Schlauchpaket mit Halteklammer.
- Fig. 6: eine Seitenansicht des Farbsprühgeräts.
- Fig. 7: eine Darstellung der Klammer zur Verbindung der einzelnen Schläuche bzw. Leitungen.
- Fig. 8: Eine Klammer gem. Fig. 7 mit eingebrachten Schläuchen.

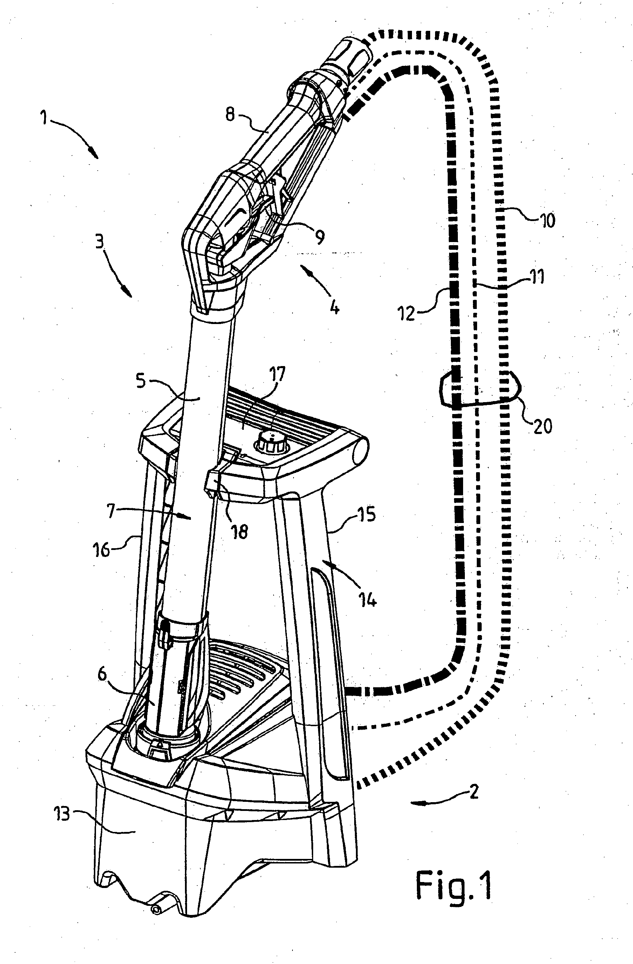

Im Einzelnen zeigt Figur 1 ein erfindungsgemäßes Farbsprühgerät 1 in einer perspektivischen Darstellung. Das Farbsprühgerät umfasst eine Basisstation 2 sowie eine Farbsprühlanze 3, welche durch eine Anzahl von Leitungen bzw. Schläuchen verbunden sind.

Die Farbsprühlanze 3 weist an ihrem oberen Ende eine Bedieneinheit 4 auf, welche in einen Lanzenteil 5 mündet, und am vorderen Ende des Lanzenteils 5 einen Sprühkopf 6 zur Abgabe der zu sprühenden Farbe umfasst. Der Lanzenteil 5 bildet eine Grifffläche 7 aus, an welcher die Lanze gehandhabt werden kann. An der Bedieneinheit 4 ist ein Handgriff 8 vorgesehen, in dessen Bereich an Abzug 9 zur Freigabe bzw. Bedienung der Farbsprühvorrichtung vorgesehen ist.

Am der Lanze 5 abgewandten Ende des Handgriffs 8 der Farbsprühlanze 3 verlassen verschiedene Schlauch- bzw. Leitungspakete die Farbsprühlanze 3. Einerseits ist die Farbsprühlanze 3 durch eine Luftleitung 10 mit der Basisstation 2 verbunden, andererseits ist auch ein Steuerschlauch 11 sowie eine Farbleitung 12 zwischen der Farbsprühlanze 3 und der Basisstation 2 angeordnet. Die Luftleitung 10 dient zur Bereitstellung von Arbeitsluft für den Farbsprühvorgang, die Farbleitung 12 dient zur Bereitstellung der aufzutragenden Farbe, die Steuerleitung 11 bzw. der Steuerschlauch 11 zur Steuerung der in der Basisstation 2 angeordneten Arbeitseinheit der Antriebseinheit.

Die Basisstation 2 umfasst einen Sockelkörper 13, in welchem die Antriebseinheit für das Farbsprühgerät 1 untergebracht ist. Auf den Sockelkörper 13 aufgesetzt befindet sich ein Pylon 14, welcher durch zwei angeordnete Streben 15, 16 eine über dem Sockelkörper 13 angeordnete Plattform 17 hält. Auf diese Weise werden in oder an der Plattform 17 angeordnete Elemente näher an einen Benutzer herangeführt, sodass er diese ohne Bücken bzw. ohne entsprechende unkomförtable Bewegung erreichen kann.

An der Plattform 17 ist in einem Gerät-vorderseitigen Bereich eine Halteklammer 18 zur klemmenden Halterung der Farbsprühlanze 3, insbesondere des Lanzenkorpus 5 angeordnet. Die Halteklammer 18 ist derart ausgestaltet, dass die Farbsprühlanze 3 in jeder Richtung, vorzugsweise jedoch in der nach vorne bzw. nach hinten gerichteten Position, bezogen auf die Ausrichtung der Bedieneinheit 4, insbesondere des Handgriffs 8 eingebracht werden kann.

Am Schlauchpaket der Luftleitung 10 der Steuerleitung 11 sowie der Farbleitung 12 ist eine Halteklammer 20 vorgesehen, welche die einzelnen Leitungen bzw. Schläuche zu einer Einheit zusammenfasst. Entsprechend der Länge der einzelnen Leitungen 10, 11, 12 können auch mehrere Halteklammern 20 über den gesamten Leitungslauf vorgesehen sein.

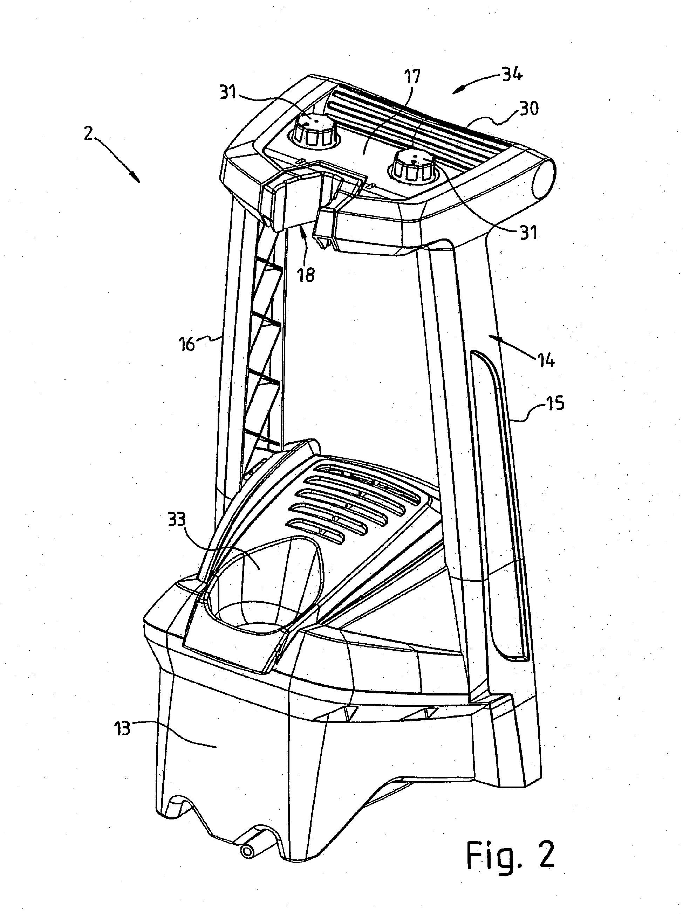

Figur 2 zeigt eine Frontansicht der Basisstation 2 ohne dargestellte Farbsprühlanze bzw. Leitungen. Die Basisstation 2 umfasst in ihrem unteren Bereich den Sockelkörper 13 sowie darauf aufstehend die Streben 15, 16 zur Ausbildung des Pylons 14, auf dessen oberen Ende die Plattform 17 angeordnet ist. Am rückseitigen Bereich der Plattform 17 ist ein Handgriff 30 vorgesehen, welcher die Station zu einer einfach tragbaren Einheit ausbilden soll. Auf der Plattform sind Wahlschalter 31 angeordnet, welche einerseits unterschiedliche Bedienfunktionen zur Verfügung stellen können, andererseits aber auch zur Steuerung der entsprechenden Arbeitseinheiten, beispielsweise der Farbförderpumpe oder des Gebläses dienen können. Die Wahlschalter können entweder als Drehschalter 31 ausgebildet sein oder aber auch andersartige Ausgestaltungen, beispielsweise in Form von Kippschaltern umfassen.

An der Vorderseite der Plattform 17 ist die Halteklammer 18 angeordnet, welche in ihrer Formgebung der entsprechenden Außenform der Lanze 5 angepasst ist. Im Sockelkörper 13 der Basisstation 2 ist eine Abtropfschale 33 angeordnet, welche vorzugsweise als entnehmbares, und somit einfach zu reinigendes Bauteil ausgebildet ist.

Der obere Teil der Plattform 17 bildet mit eventuell im Sockelkörper 13 untergebrachten elektronischen Schaltungen die Kontrolleinheit 34 aus, welche zur Kontrolle der jeweiligen Funktion und Arbeitsparameter des erfindungsgemäßen Farbsprühgeräts 1 vorgesehen ist.

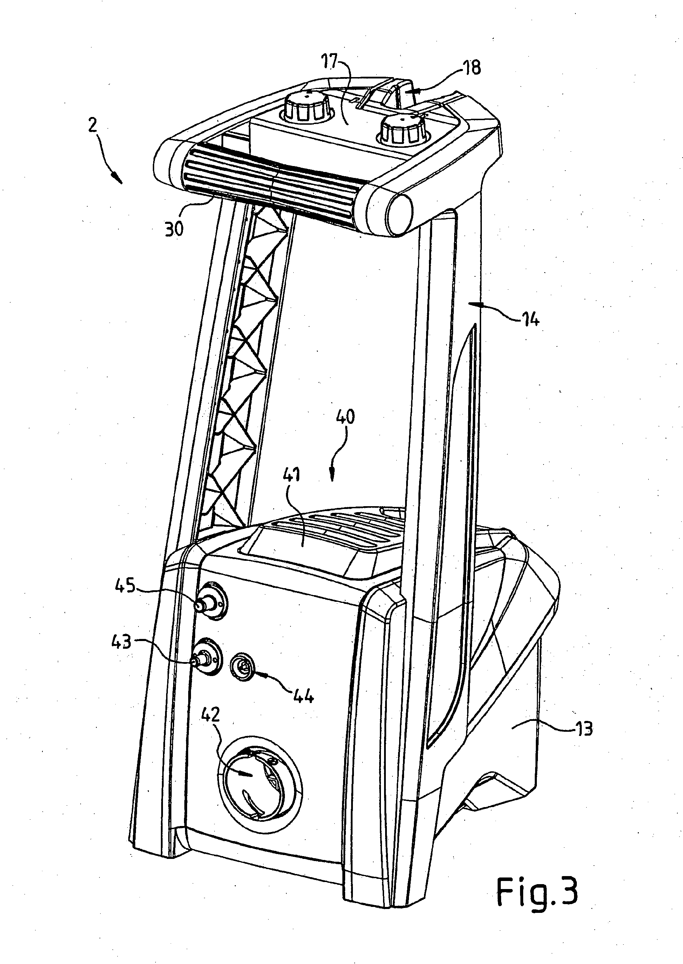

Figur 3 zeigt eine Rückansicht der Basisstation 2, ebenfalls ohne Darstellung der Farbsprühlanze 3 sowie der entsprechenden Leitungen.

Die Basisstation 2 weist auf ihrer Oberseite Einlassöffnungen 40 mit dahinter angeordnetem Luftfilter auf, um ein entsprechendes Luftvolumen für die Bereitstellung der Arbeitsluft fördern zu können. Die hierzu angeordnete Abdeckkappe 41 kann gegebenenfalls mit der Abtropfschale 33 entnommen werden, um eine einfache und frequentierte Zugänglichkeit des Luftfilters zu ermöglichen.

Im Bereich des Sockelkörpers 13 der Basisstation 2 befinden sich auf der Rückseite verschiedene Anschlussvorrichtungen, welche zum Anschluss der Luftleitung 10, des Steuerschlauchs 11, sowie der Farbleitung 12 vorgesehen sind. Der Luftausgang 42 zum Anschluss der Luftleitung 10 ist an der geräteseitig tiefsten Stelle angeordnet, und weist gegenüber den anderen Anschlussbereichen einen erheblich vergrößerten Querschnitt auf. Der Luftausgang 42 kann hierbei mit einem Bajonettverschluss ausgestattet sein, um ein einfaches Anschließen und Entfernen der Luftleitung 10 zu ermöglichen.

Oberhalb des Luftausgangs 42 befindet sich ein Farbeingang 45, an welchen ein Anschlussschlauch anschließbar ist, der beispielsweise in einem neben dem Gerät stehenden Farbeimer bzw. Farbtank eingebracht werden kann, und so ein einfaches Entnehmen der zu versprühenden Farbe aus einem Liefergebinde ermöglicht.

Unterhalb des Farbeingangs 45 ist der Steuerluftschlaucheingang 44 vorgesehen, welcher einen kleineren Querschnitt aufweist, und nur zur Übertragung eines pneumatischen Steuersignals dient, welches von der Bedieneinheit 4, betätigt über den Abzug 9 der Farbsprühlanze 3 ausgeht.

Unterhalb des Farbeingangs 45 befindet sich der Farbauslass 43 zum Anschluss der Farbleitung 12, welcher sodann die durch die Basisstation 2, bzw. die darin befindlichen Arbeitseinheiten angesaugte Farbe aus dem Farbeingang 45 über den Farbauslass 43 und die Farbleitung 12 zum Sprühkopf 6 befördert.

Der Steuerschlaucheingang 44 mündet zu einer elektropneumatischen Schaltvorrichtung, welche bei vorhandenem Steuerdruck im Steuerschlauch 11 die Farbpumpe zwischen Farbeingang 45 und Farbauslass 43 aktiviert, so dass Farbe zur Farbsprühlanze 3, bzw. zum Farbsprühkopf 6 gefördert wird. Der elektropneumatische Schalter ist vorzugsweise als Taster ausgebildet, so dass beim Loslassen des Abzugs 9 an der Bedieneinheit 4 ein entsprechender Druckabfall in der Steuerleitung 11 automatisch zum Abschalten der Farbpumpe führt.

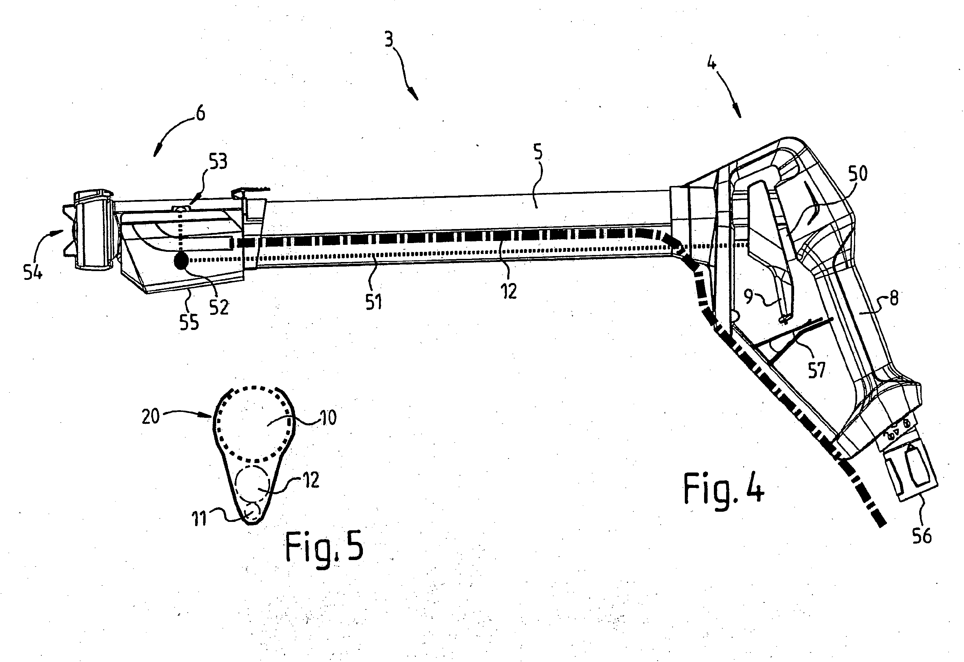

Figur 4 zeigt eine Seitenansicht der erfindungsgemäßen Farbsprühlanze 3 in einer schematischen Darstellung.

Die Bedieneinheit 4 umfasst den Handgriff 8 sowie einen Abzug 9, welcher auf seiner Rückseite auf einen Druckschalter 50 Druckkraft ausüben kann. Der Druckschalter kann hierbei als balgartiger pneumatischer Druckerzeuger ausgebildet sein, oder auch eine Kolben-Zylindermechanik umfassen.

An seiner Vorderseite ist am Abzug 9 ein Kraftübertragungsmittel 51 in Form eines Zugs dargestellt, welcher beispielsweise als Seilzug ausgebildet sein kann. Der Seilzug 51 überträgt die Bewegung des Abzugs 9 über eine entsprechende Umlenkmechanik 52 auf die Nadel eines Nadelventils 53 (hier nicht im Detail dargestellt), welches sodann den Farbaustritt aus einer Farbdüse 54 ermöglicht. Die Farbe wird hierbei über die Farbleitung 12 vom Basisgerät bis zur Farbdüse bereitgestellt. Vorzugsweise ist die Farbdüse in Form einer schlitzförmigen Düse ausgebildet, wie sie in einer anderen Patentanmeldung der Anmelderin beschrieben ist.

Der Sprühkopf 6 weist in einer vorteilhaften Ausgestaltung eine Abdeckung 55 auf, welche die vorderen mechanisch bewegten Bereiche der Umlenkung 52 und des Nadelventils 53 inklusive der Vorrichtung zur Kraftübertragung 51 abdeckt. In der Bedienung der erfindungsgemäßen Farbsprühlanze 3 umfasst ein Benutzer den Griff 8 mit einer Hand, so dass er mit dem Finger den Abzug 9 einfach bedienen kann. Mit der zweiten Hand kann die Lanze 5 ebenfalls umfasst werden, so dass eine einfache und zielgerichtete und vor allem gleichmäßige Führung des Sprühkopfes entlang einer zu beschichtenden bzw. zu besprühenden Fläche gewährleistet ist. Des Weiteren stellt die Ausbildung der Farbsprühlanze 3 über eine entsprechende Länge des Lanzenbestandteils 5 die Möglichkeit zur Verfügung, von einer Position aus größere Flächen gleichmäßig durch entsprechenden Abstand und daraus resultierenden Aktionsradius zu beschichten, so dass vorzugsweise im Bereich der Beschichtung von Wänden mit Wandfarbe ein erheblich verbessertes Ergebnis erreicht werden kann. Auch die Farbbeschichtung von Gebäudedecken oder weiter entfernt gelegenen Gebäudebestandteilen stellt über unterschiedliche Lanzenlängen des Lanzenbestandteils 5 und entsprechend angepassten Leitungen 12 sowie Kraftübertragungsvorrichtungen 51 keine größere Problemstellung dar.

Die Bedieneinheit 4 weist an ihrem unteren Ende des Griffs 8 einen Luftschlauchanschluss 56 auf, welcher ebenfalls vorliegend in der Form eines entfernbaren Bajonettverschlusses ausgebildet sein kann, um eine einfache Demontage der Luftleitung 10 zu ermöglichen.

Die Farbleitung 12 ist vorliegend vorzugsweise in einem vorderen Rahmenteil der Bedieneinheit 4 geführt, so dass sie unten parallel zum Luftschlauchanschluss 56 die Bedieneinheit 4 verlässt.

Die Bedieneinheit 4 weist darüber hinaus in einem Bereich unterhalb des Abzugs 9 eine Feder 57 auf, welche eine Feststellung des Abzugs 9 in einem abgezogenen Zustand ermöglicht, in dem die Feder mit einer Rastnase nach oben gedrückt, und in eine entsprechend dazu angeordnete Rastnase am Abzug 9 eingehängt wird.

Figur 5 zeigt eine schematische Darstellung einer erfindungsgemäßen Klammer 20, welche im Bereich zwischen der Farbsprühlanze 3 und der Basisstation 2 das Leitungs- bzw. Schlauchpaket aus Luftleitung 10, Farbschlauch 12 sowie Steuerschlauch 11 zusammen hält. Bei entsprechender Ausbildung der Luftleitung 10 als Riffel-Schlauch ist es möglich, dass die Klammer 20 in die Riffelung der Luftleitung 10 eingreift, und somit in Längsrichtung eine ortsfeste Position am Luftleitungsschlauch 10 einnimmt. Der Farbschlauch 12 sowie der Steuerschlauch 11 können hierbei als Zwillingsschlauch ausgebildet sein, welche entweder nebeneinander oder auch ineinander laufend als Endlosware hergestellt werden können. Zwischen der Luftleitung 10 und dem Farbschlauch 12 bzw. dem Paktes des Farbschlauchs 12 und Steuerschlauchs 11 besteht keine feste Verbindung in Längsrichtung, da sich der Luftleitungsschlauch 10 im laufenden Betrieb durch eine entsprechende Erwärmung der Arbeitsluft und die daraus resultierende Erwärmung der Luftleitung 10 ausdehnt, und somit ein Abgleiten der weniger stark erwärmten Farbleitung 12 bzw. der weniger stark sich ausdehnenden anderen Leitungen an der Luftleitung 10 ermöglicht wird.

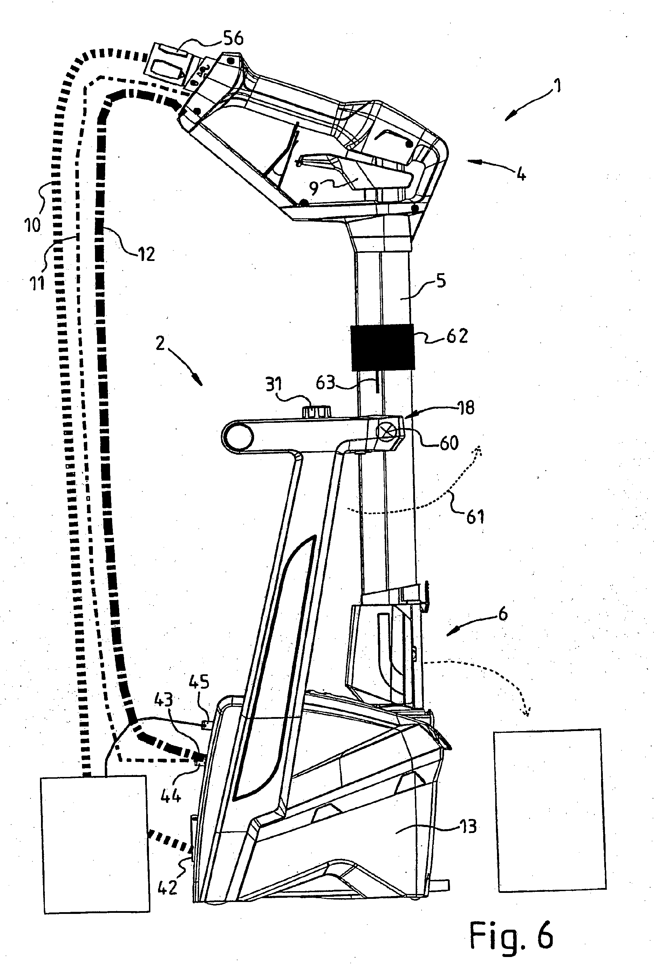

Figur 6 zeigt eine seitliche Darstellung des erfindungsgemäßen Farbsprühgeräts 1 mit in der Halteklammer 18 angeordneter Farbsprühlanze 3. Die Halteklammer 18 weist zur Bereitstellung einer Reinigungsfunktion eine Schwenkachse 60 auf, um welche die Halteklammer 18 schwenkbar in einer Schwenkbewegung 61 bewegbar ist, so dass die darin gehaltene Farblanze 3 mit ihrem Lanzenbestandteil 5 entsprechend der Schwenkbewegung 61 verkippt werden kann. Um ein Verrutschen der Farbsprühlanze 3 beim Verschwenken entlang der Verschwenkbewegung 61 zu verhindern, ist ein Kopplungsmittel 62 vorgesehen, welches an einem unteren Ende einen Stift 63, vorzugsweise auf jeder Seite des Kopplungsmittels 62 aufweist, welcher in eine entsprechend dafür vorgesehene Bohrung (hier nicht dargestellt) in der Halteklammer 18 einschiebbar ist, und somit ein Verrutschen bzw. Herausfallen der Farbsprühlanze 3 aus der Halteklammer 18 in einem geschwenkten Zustand verhindert. Zudem dient das Kopplungsmittel auch der Sicherung und Fixierung der Farbsprühlanze 3 in einer vertikalen Lagerposition am Basisgerät 2, insbesondere beim Transport der gesamten Geräts am Handgriff 30. Vor dem Sockelkörper 13 des Basisgeräts 2 kann für die Reinigungsfunktion ein Gefäß, beispielsweise ein leerer Eimer vorgesehen werden, in welchen die entsprechend der Reinigung durch das Farbsprühgerät hindurch geförderte Reinigungsflüssigkeit ablaufen kann. Anstatt eines Farbreservoirs kann an den Farbzuführungsanschluss des Basisgeräts 2 (siehe Figur 3, 45) beispielsweise ein Reservoir mit Reinigungsflüssigkeit, vorzugsweise Wasser, angeschlossen werden, wobei die Reinigungsflüssigkeit sodann bei ausgeschaltetem Gebläse durch entsprechende Einstellung der Wahlschalter 31 über die Farbpumpe durch das Gerät sowie die Farbleitung 12 und die Anordnungen der Farbsprühlanze 3, insbesondere des Farbsprühkopfs 6 und der Farbdüse 54 hindurch gefördert werden kann und sodann in dem erwähnten vor dem Sockelkörper 13 angeordneten Reinigungsreservoir nach erfolgter Gerätereinigung aufgefangen werden kann.

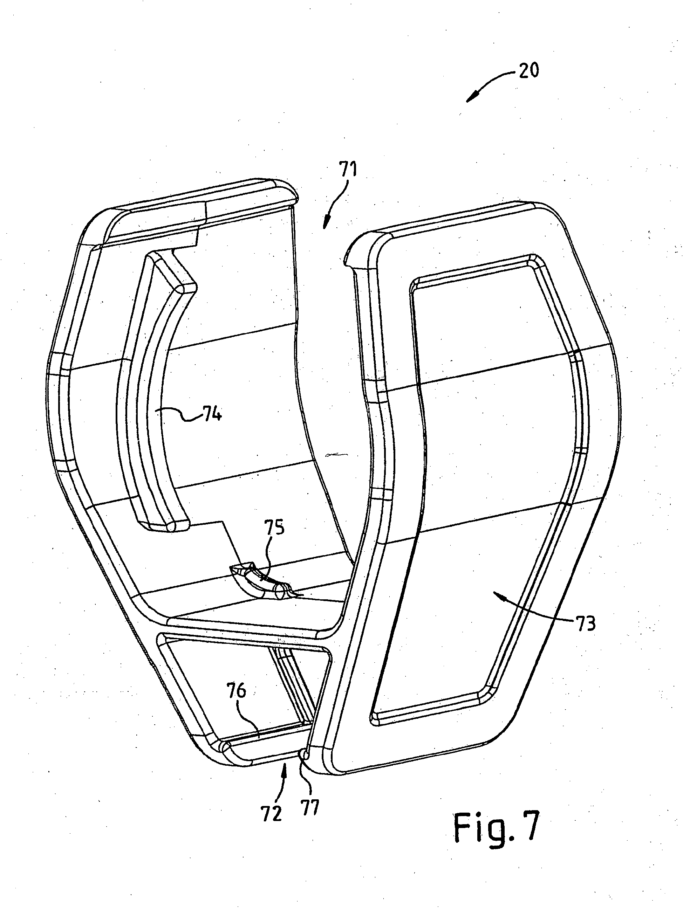

Figur 7 zeigt eine Verbindungsklammer 20, welche zur Herstellung einer Verbindung zwischen Luftschlauch, Steuerschlauch und Farbschlauch an dem Schlauchpaket zwischen Basisstation 2 und Farbsprühlanze 3 benutzt wird. Die Klammer 20 umfasst einen oberen Klemmbereich 71 zur Aufnahme des Luftschlauchs und einen unteren Klemmbereich 72 zur Aufnahme des Farb- und Steuerschlauchs. Auf den Seitenflächen 73 können Informationen wie beispielsweise Anbringungs- und Montage hinweise oder auch Firmenname oder Logo gut sichtbar angeordnet werden.

Der obere Klemmbereich 71 weist auf seiner Innenseite mehrere Vorsprünge 74 und 75 auf, welche zum Eingriff in einen Rillenförmigen Mantel einer Luftleitung / eines Luftschlauchs dienen, um die Klammer 20 daran in Längsrichtung ortsfest zu halten. Die Vorsprünge 74, 75 können dabei ergonomisch der Schlauchform bzw. Rillenform angepasst sein, um eine besonders gute Führung zu erreichen, wodurch auch eine Drehbarkeit der Klammer um die Längsachse der Luftleitung ermöglicht wird.

Im unteren Klemmbereich 72 sind an dessen unterem Ende Rastelemente vorgesehen 76,77, welche einen in den unteren Klemmbereich eingebrachten Schlauch hintergreifen und Formschlüssig gegen ein Herausfallen sichern.

Der untere Klemmbereich 72 sowie der obere Klemmbereich 71 können als flexible federnde Seitenarme ausgebildet sein, oder die Einbringung der zu haltenden Schläuche erfolgt durch elastische Deformation der einzelnen Schläuche bei der Einbringung.

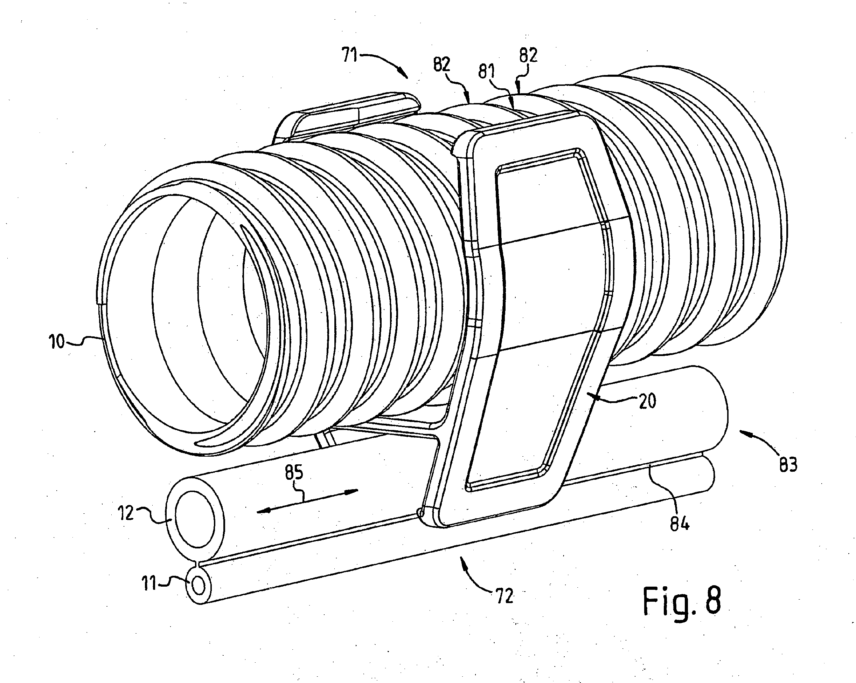

Figur 8 zeigt eine Klammer 20 nach Fig. 7, in welcher ein Abschnitt eines zu haltenden Schlauchpakets dargestellt ist. Die Klammer 20 ist mit ihrem oberen Klemmbereich 71 in Längsrichtung ortsfest an einem Luftschlauch 10 eingerastet, indem sich die Vorsprünge 74 und 75 in die Rillen des Luftschlauchs einbetten. Die Vorsprünge greifen dabei in einen Bereich mit kleinem Außendurchmesser 81 ein, welcher jeweils durch einen Bereich mit großem Außendurchmesser 82 entlang der Schlauchlängsrichtung begrenzt wird.

Im unteren Klemmbereich 72 ist ein Farbschlauch 12 und ein Steuerschlauch 11 in Form eines Zwillingsschlauchs 83 dargestellt. Die Schläuche 11 und 12 sind über einen Steg entlang der Schlauchlänge längs miteinander verbunden, wobei im Bereich der Montageposition an der Farbsprühlanze 3 und der Basisstation 2 die Schläuche durch auftrennen des Stegs voneinander getrennt werden können, um unterschiedliche Anschlüsse zu erreichen oder auf unterschiedliche Längen abgeschnitten zu werden.

Der Zwillingsschlauch 83 ist im unteren Klemmbereich 72 durch eingreifen der Rastelemente 76 und 77 in den Stegbereich 84 derart beweglich gehalten, dass ein Gleiten des Zwillingsschlauchs entlang der Längsrichtung 85 ermöglicht wird. Dies ist insbesondere dann notwendig, wenn ein Schlauchpaket von mehreren Metern Länge vorgesehen wird, das sich die im Luftschlauch 10 geförderte Luft im Gebläse der Basisstation 2 erwärmt, dadurch auch der Luftschlauch 10 erwärmt wird, und dieser sich infolge dessen ausdehnt. Außerdem würden starre Befestigungen im oberen Klemmbereich 71 und im unteren Klemmbereich 72 zu einer ungewünschten Versteifung des Schlauchpakets führen, was dem Handhabungskomfort entgegenstehen würde.

Die einzelnen Betriebsarten sind in folgender Tabelle angegeben:

| **Betriebsart** | **Position der Farblanze** | **Farbanschluss** | **Einstellung Abzug** | **Gebläse für Luftförderung** | **Farbförderpumpe** |
|---|---|---|---|---|---|
| **Farbsprüh -betrieb** | Benutzer | Farbreservoir (Eimer) | Manuell bedient | Geregelte oder volle Leistung | Geregelte Leistung |
| **Entleerung** | Benutzer oder in Halteklammer an der Basisstation | Farbreservoir (Eimer) | Manuell bedient oder per Rastfeder festgestellt | Deaktiviert | Geregelte oder volle Leistung in umgekehrter Förderrichtung |
| **Reinigung** | Halteklammer an der Basisstation, Position nach vorne aus dem Abtropfbecher herausgeschwenkt und auf Reinigungsbehälter gerichtet | Reinigungsflüssigkeit (Wasser) | Per Rastfeder festgestellt | Deaktiviert | Geregelte oder volle Leistung, kontinuierlich oder gepulst |

### Bezugszeichenliste:

- 1: Farbsprühgerät
- 2: Basisstation
- 3: Farbsprühlanze
- 4: Bedieneinheit
- 5: Lanze
- 6: Sprühkopf
- 7: Grifffläche
- 8: Handgriff an Farbsprühlanze
- 9: Abzug
- 10: Luftleitung
- 11: Steuerschlauch
- 12: Farbleitung
- 13: Sockelkörper
- 14: Pylon
- 15: Strebe
- 16: Strebe
- 17: Plattform
- 18: Halteklammer
- 20: Klammer
- 30: Handgriff an Basisstation
- 31: Wahlschalter
- 33: Abtropfschale
- 34: Kontrolleinheit
- 40: Einlassöffnungen
- 41: Abdeckklappe
- 42: Luftausgang
- 43: Farbauslass
- 44: Steuerschlaucheingang
- 45: Farbeingang
- 50: Druckschalter
- 51: Kraftübertragung
- 52: Umlenkung
- 53: Nadelventil
- 54: Farbdüse
- 55: Abdeckung
- 56: Luftschlauchanschluss
- 57: Feder
- 60: Schwenkachse
- 61: Schwenkbewegung
- 62: Kopplungsmittel
- 63: Stift
- 71: oberer Klemmbereich
- 72: unterer Klemmbereich
- 73: Seitenfläche
- 74: Vorsprung
- 75: Vorsprung
- 76: Rastelement
- 77: Rastelement
- 81: kleiner Außendurchmesser
- 82: großer Außendurchmesser
- 83: Zwillingsschlauch
- 84: Steg
- 85: Längsrichtung / Gleitrichtung

## Patentansprüche

1. Transportables Farbsprühgerät (1),
- wobei das Farbsprühgerät (1) eine Basisstation (2) mit einer Antriebseinheit und eine rohrartige Lanze (3) mit einem ersten Kanal zum Durchleiten der Farbe und einem zweiten Kanal zum Durchleiten des Luftstroms umfasst,
- wobei die Antriebseinheit
o eine erste Arbeitseinheit zur Erzeugung eines Luftstroms,
o eine zweite Arbeitseinheit zur Erzeugung eines Farbstroms mit einem Saugschlauch zum Ansaugen von flüssiger Farbe und
o eine Kontrolleinheit (34) zum Steuern bzw. Regeln der ersten Einheit und der zweiten Einheit umfasst,
- wobei die Lanze (3) an einem ersten Ende eine Bedieneinheit (4) aufweist,
- wobei die Lanze (3) an einem zweiten Ende einen Sprühkopf (6) aufweist,
- wobei die Lanze (3) über eine Luftleitung (10) mit der ersten Arbeitseinheit verbunden ist,
- wobei die Lanze (3) über eine Farbleitung (12) mit der zweiten Arbeitseinheit verbunden ist,
- wobei zwischen der Bedieneinheit (14) und dem Sprühkopf (6) eine Grifffläche (7) angeordnet ist, an welcher die Lanze (3) von einem Nutzer greifbar ist,
- wobei die Bedieneinheit (4)
o sowohl wenigstens eine der Arbeitseinheiten der Antriebseinheit steuert,
o als auch den Austritt von Farbe an dem entfernt von der Bedieneinheit (4) liegenden Sprühkopf (6) bedient.

2. Transportables Farbsprühgerät nach Anspruch 1, **dadurch gekennzeichnet, dass** die Bedieneinheit die zweite Arbeitseinheit zur Erzeugung eines Farbstroms steuert, wobei sie eine erste Steuerungsvorrichtung insbesondere einen Druckschalter mit Steuerschlauch umfasst, in welchem insbesondere durch ein Bedienen eines Abzugs der Bedieneinheit ein erhöhter Steuerluftdruck erzeugbar ist und wobei die Kontrolleinheit insbesondere einen in der Basisstation angeordneten elektropneumatischen Taster umfasst, an welchen der Steuerschlauch angeschlossen ist und welcher durch den Steuerluftdruck betätigt wird, und dass die Bedieneinheit ein im Sprühkopf gelagertes Farbventil bedient, wobei das Farbventil insbesondere eine durch eine Nadel verschließbare Farbaustrittsöffnung umfasst, wobei hierfür eine Bedienvorrichtung insbesondere als mechanische Bewegungs- und Kraftübertragungsvorrichtung ausgebildet ist, mit welcher eine Bewegung eines Abzugs der Bedieneinheit in eine Bewegung der Nadel umsetzbar ist, wobei die Bewegungs- und Kraftübertragungsvorrichtung insbesondere einen Zug, vorzugsweise einen Seilzug oder einen Bowdenzug umfasst, welcher vorzugsweise in seiner Länge verstellbar ist, wobei insbesondere der Bewegungs- und Kraftübertragungsmechanismus auch einen Hebel umfasst, an welchem der Zug, insbesondere Seilzug oder der Bowdenzug angreift und welcher schwenkbar mit dem Sprühkopf verbunden ist.

3. Transportables Farbsprühgerät nach Anspruch 1 oder 2, **dadurch gekennzeichnet, dass** die Bedieneinheit derart dimensioniert ist, dass bei einem vollständigen betätigen eines Abzugs der Bedieneinheit zunächst der Sprühkopf bedient und für einen Austritt der Farbe geöffnet wird und anschließend wenigstens eine der Arbeitseinheiten der Antriebseinheit gestartet wird.

4. Transportables Farbsprühgerät nach Anspruch 1 oder 2, **dadurch gekennzeichnet, dass** bei einem Loslassen eines vollständig betätigten Abzugs der Bedieneinheit zunächst die wenigstens eine Arbeitseinheit der Antriebseinheit gestoppt wird und anschließend der Sprühkopf für den Austritt von Farbe geschlossen wird.

5. Transportables Farbsprühgerät nach einem der vorhergehenden Ansprüche, **dadurch gekennzeichnet, dass** die Luftleitung und die Farbleitung, welche die Lanze mit den Arbeitseinheiten der Basisstation verbinden, aneinander verbunden sind, wobei die Farbleitung an der Luftleitung derart geführt ist, dass die Farbleitung relativ zu der Luftleitung verschiebbar ist, wobei Führungsmittel insbesondere als Klammern ausgebildet sind, welche die Luftleitung verschiebesicher umgreifen und die Farbleitung lose umgreifen, wobei die Luftleitung insbesondere in Längsrichtung abwechselnd kleine und große Außendurchmesser aufweist und die Klammer sich an wenigstens einem großen Außendurchmesser gegen ein Verschieben in die Längsrichtung abstützt.

6. Transportables Farbsprühgerät nach einem der vorhergehenden Ansprüche, **dadurch gekennzeichnet, dass** die Farbleitung und der Steuerschlauch zwischen der Lanze und der Basisstation als einteiliger Zwillingsschlauch ausgebildet sind, wobei die Farbleitung und der Steuerschlauch insbesondere unterschiedliche Innendurchmesser aufweisen und wobei die Steuerschlauch insbesondere mittels der mit ihm verbundenen Farbleitung an der Luftleitung geführt ist.

7. Transportables Farbsprühgerät nach einem der vorhergehenden Ansprüche, **dadurch gekennzeichnet, dass** die erste Arbeitseinheit zur Erzeugung eines Luftstroms als Gebläse ausgebildet ist, welches Umgebungsluft durch einen Luftfilter ansaugt und durch den Luftschlauch und die Lanze bis in den Sprühkopf fördert, dass die zweite Arbeitseinheit zur Erzeugung eines Farbstroms als Pumpe, insbesondere als Schlauchpumpe, ausgebildet ist, und dass die Kontrolleinheit zum Steuern bzw. Regeln der ersten Arbeitseinheit und der zweiten Arbeitseinheit insbesondere einen Wahlschalter für eine Förderleistung der Schlauchpumpe und insbesondere einen Wahlschalter für Betriebsmodi, vorzugsweise Sprühbetrieb und Reinigungsbetrieb umfasst, wobei das Gebläse in einem Reinigungsbetrieb deaktiviert ist und ausschließlich die Pumpe, insbesondere mit höchster Leistung, betrieben wird.

8. Transportables Farbsprühgerät nach einem der vorhergehenden Ansprüche, **dadurch gekennzeichnet, dass** die Basisstation des Farbsprühgeräts eine Abtropfschale umfasst, in welche die Lanze mit ihrem Sprühkopf einstellbar ist und dass die Abtropfschale zur Reinigung von der Basisstation abnehmbar ist.

9. Transportables Farbsprühgerät nach einem der vorhergehenden Ansprüche, **dadurch gekennzeichnet, dass** die Basisstation des Farbsprühgeräts im Wesentlichen durch einen Sockelkörper und einen Pylon gebildet ist, wobei die Arbeitseinheiten in dem Sockelkörper aufgenommen sind, wobei der Pylon eine mit Abstand über dem Sockelkörper liegende Plattform und insbesondere zwei Streben umfasst, wobei die Streben die Plattform tragen und mit dem Sockelkörper verbunden sind, wobei die Plattform eine Halteklammer für die Lanze umfasst, wobei die Halteklammer an der Plattform insbesondere schwenkbar um eine horizontale Achse angelenkt ist und wobei die Halteklammer insbesondere ein erstes Kupplungsmittel umfasst, wobei das erste Kupplungsmittel insbesondere als Bohrung ausgebildet ist, wobei das erste Kupplungsmittel mit einem zweiten Kupplungsmittel kuppelbar ist, wobei das zweite Kupplungsmittel an der Lanze angeordnet oder Lanze zugeordnet ist und insbesondere als Stift ausgebildet ist und wobei die Lanze, wenn sie von der Halteklammer gegriffen ist, mit ihrem Sprühkopf insbesondere in der Abtropfschale steht.

10. Transportables Farbsprühgerät nach Anspruch 9, **dadurch gekennzeichnet, dass** mindestens ein Wahlschalter der Kontrolleinheit in der Plattform angeordnet sind.

11. Transportables Farbsprühgerät nach einem der vorhergehenden Ansprüche, **dadurch gekennzeichnet, dass** der Farbschlauch, welcher einen Farbauslass der Basisstation mit einem Farbeinlass des Sprühkopfs verbindet, an dem Farbauslass der Basisstation mit einer höheren Abzugskraft gesichert ist als an dem Farbeinlass des Sprühkopfs.

12. Transportables Farbsprühgerät nach einem der vorhergehenden Ansprüche, **dadurch gekennzeichnet, dass** ein Luftfilter insbesondere an einer Oberseite eines Sockelkörpers der Basisstation angeordnet ist und von einem Schutzgitter überdeckt wird, wobei das Schutzgitter insbesondere einteilig mit einer Abtropfschale ausgebildet ist.

13. Transportables Farbsprühgerät nach einem der vorhergehenden Ansprüche, **dadurch gekennzeichnet, dass** das Luftstromvolumen und der Luftdruck am Sprühkopf den HVLP Grenzwerten entspricht und insbesondere einen Druck von ca. 10 psi (ca. 0,7 bar) nicht überschritten wird.

14. Transportables Farbsprühgerät nach einem der vorhergehenden Ansprüche, **dadurch gekennzeichnet, dass** die erste Arbeitseinheit zur Erzeugung eines Luftstroms steuerbar, insbesondere regelbar zur Veränderung des Luftströmflusses ausgebildet ist.

15. Transportables Farbsprühgerät nach Anspruch 14, **dadurch gekennzeichnet, dass** die Steuerung bzw. Regelung des Luftstromflusses in vorgegebenen Stufen, insbesondere Programmen und/oder stufenlos einstellbar ist, wobei vorzugsweise eine daraus resultierende Steuerung bzw. Regelung der zweiten Arbeitseinheit, insbesondere über die Kontrolleinheit vorgesehen ist.

## Claims

1. A portable paint spraying device (1),
- wherein the paint spraying device (1) comprises a base station (2) with a drive unit and a tubular lance (3) with a first channel for the passage of the paint and a second channel for the passage of the air flow,
- wherein the drive unit comprises
o a first work unit for generating an air flow,
o a second work unit for generating a stream of paint with a suction hose for sucking in liquid paint and
o a control unit (34) for controlling or regulating the first unit and the second unit,
- wherein the lance (3), has an operating unit (4) on a first end,
- wherein the lance (3) has a spray head (6) on a second end,
- wherein the lance (3) is connected by means of an air pipe (10) to the first work unit
- wherein the lance (3) is connected by means of a paint line (12) to the second work unit,
- wherein between the operating unit (4) and the spray head (6) a gripping surface (7) is arranged, on which the lance (3) can be gripped by a user,
- wherein the operating unit (4),
o both controls at least one of the work units of the drive unit,
o as well as operates the discharge of paint to the spray head (6) which is remote from the operating unit (4).

2. A portable paint spraying device according to Claim 1, **characterized in that** the operating unit controls the second work unit for generating a stream of paint, wherein it comprises a first command device in particular a pressure switch with control hose, in which in particular an increased control air pressure can be generated by an operation of a trigger of the operating unit and wherein the control unit comprises in particular an electro-pneumatic sensing device arranged in a base station, to which the control hose is connected and which is activated by the control air pressure, and that the operating unit operates a paint valve mounted in the spray head, wherein the paint valve comprises in particular a paint discharge opening closable by a needle, wherein an operating device is designed for this in particular as a mechanical movement- and force transmission device, with which a movement of a trigger of the operating unit can be converted into a movement of the needle, wherein the movement- and force transmission device comprises in particular a pull, preferably a cable pull or a Bowden cable, which is preferably adjustable in its length, wherein in particular the movement- and force transmission mechanism also comprises a lever, with which the pull, in particular the cable pull or the Bowden cable engages and which is pivotally connected to the spray head.

3. A portable paint spraying device according to Claim 1 or 2, **characterized in that** the operating unit is dimensioned such that in the case of a complete activation of the trigger of the operating unit the spray head initially operates and is opened for a discharge of the paint and subsequently at least one of the work units of the drive unit is started.

4. A portable paint spraying device according to Claim 1 or 2, **characterized in that** in the case of a release of a completely activated trigger of the operating unit initially the at least one work unit of the drive unit is stopped and subsequently the spray head for the discharge of paint is closed.

5. A portable paint spraying device according to one of the preceding claims, **characterized in that** the air pipe and the paint line, which connect the lance to the work units of the base station, are connected to each other, wherein the paint line is guided to the air pipe in such a way that the paint line is displaceable relative to the air pipe, wherein guidance means are designed in particular as brackets, which encompass the air pipe secured against displacement and encompass the paint line loosely, wherein the air pipe has small and large outer diameters in particular alternately in the longitudinal direction and the bracket is supported on at least one large outer diameter against a displacement in the longitudinal direction.

6. A portable paint spraying device according to one of the preceding claims, **characterized in that** the paint line and the control hose between the lance and the base station are designed as a single-piece twin hose, wherein the paint line and the control hose in particular have different inner diameters and wherein the control hose in particular is guided by means of the paint line connected to it to the air pipe.

7. A portable paint spraying device according to one of the preceding claims, **characterized in that** the first work unit for generating an air flow is designed as a blower, which sucks in surrounding air through an air filter and conveys it through the air hose and the lance into the spray head, that the second work unit for generating a stream of paint is designed as a pump, in particular as a hose pump, and that the control unit for controlling or regulating the first work unit and the second work unit comprises in particular a selector switch for an output of the hose pump and in particular a selector switch for operating modes, preferably spraying operation and cleaning operation, wherein the blower is deactivated in a cleaning operation and exclusively the pump is operated, in particular at peak performance.

8. A portable paint spraying device according to one of the preceding claims, **characterized in that** the base station of the paint spraying device comprises a drip tray, in which the lance with its spray head is adjustable and that the drip tray can be removed for cleaning the base station.

9. A portable paint spraying device according to one of the preceding claims, **characterized in that** the base station of the paint spraying device is essentially formed by a base body and a pylon, wherein the work units are accommodated in the base body, wherein the pylon comprises a platform located at a distance above the base body and in particular two struts, wherein the struts support the platform and are connected to the base body, wherein the platform comprises a retaining bracket for the lance, wherein the retaining bracket is hinged to the platform pivoted in particular around the horizontal axis and wherein the retaining bracket comprises in particular a first coupling means, wherein the first coupling means is designed in particular as a bore, wherein the first coupling means can be coupled with a second coupling means, wherein the second coupling means is arranged on the lance and is assigned to the lance and is designed in particular as a pin and wherein the lance, if it is gripped by the retaining bracket, stands with its spray head in particular in the drip tray.

10. A portable paint spraying device according to claim 9, **characterized in that** at least one selector switch of the control unit is arranged in the platform.

11. A portable paint spraying device according to one of the preceding claims, **characterized in that** the paint hose, which connects a paint outlet of the base station to a paint inlet of the spray head, is secured on the paint outlet of the basis station with a higher trigger force than on the paint inlet of the spray head.

12. A portable paint spraying device according to one of the preceding claims, **characterized in that** an air filter is arranged in particular on an upper side of the base body of the base station and is covered by a protective grid, wherein the protective grid is designed in particular in one piece with a drip tray.

13. A portable paint spraying device according to one of the preceding claims, **characterized in that** the air flow volume and the air pressure on the spray head corresponds to the HVLP threshold values and in particular a pressure of approx. 10 psi (approx. 0.7 bar) is not exceeded.

14. A portable paint spraying device according to one of the preceding claims, **characterized in that** the first work unit for generating an air flow is designed in a controllable, in particular adjustable manner for changing the air stream flow.

15. A portable paint spraying device according to Claim 14, **characterized in that** the control or regulation of the air stream flow is adjustable in given steps, in particular programs and/or steplessly, wherein preferably a control or regulation resulting therefrom of the second work unit, is provided in particular via the control unit.

## Revendications

1. Appareil de pulvérisation de peinture transportable (1)
- l'appareil de pulvérisation de peinture (1) comprenant une station de base (2), avec une unité d'entraînement et une lance tubulaire (3) avec un premier canal pour le passage de la peinture et un deuxième canal pour le passage du flux d'air,
- l'unité d'entraînement comprenant
- une première unité d'entraînement pour la production d'un flux d'air,
- une deuxième unité d'entraînement pour la production d'un flux de peinture avec un tuyau d'aspiration pour l'aspiration d'une peinture liquide et
- une unité de contrôle (34) pour le contrôle ou la régulation de la première unité et de la deuxième unité,
- la lance (3) comprenant, au niveau d'une première extrémité, une unité de commande (4),
- la lance (3) comprenant, au niveau d'une deuxième extrémité, une tête de pulvérisation (6),
- la lance (3) étant reliée avec la première unité d'entraînement par l'intermédiaire d'une conduite d'air (10),
- la lance (3) étant reliée avec la deuxième unité d'entraînement par l'intermédiaire d'une conduite de peinture (12),
- entre l'unité de commande (4) et la tête de pulvérisation (6), se trouvant une surface de préhension (7), au niveau de laquelle la lance (3) peut être saisie par un utilisateur,
- l'unité de commande (4)
- contrôlant aussi bien au moins une des unités de travail de l'unité d'entraînement
- que la sortie de la peinture au niveau de la tête de pulvérisation (6) située loin de l'unité de commande (4).

2. Appareil de pulvérisation de peinture transportable selon la revendication 1, **caractérisé en ce que** l'unité de commande contrôle la deuxième unité de travail pour la production d'un flux de peinture, celle-ci comprenant un premier dispositif de commande, plus particulièrement un pressostat avec un tuyau de commande, dans lequel, grâce à la commande d'une détente de l'unité de commande, une pression d'air de commande augmentée peut être générée et l'unité de contrôle comprend plus particulièrement un bouton électropneumatique disposé dans la station de base, au niveau duquel est relié le tuyau de commande et qui est actionné par la pression d'air de commande, et **en ce que** l'unité de commande contrôle une soupape de peinture logée dans la tête de pulvérisation, la soupape de peinture comprenant plus particulièrement une ouverture de sortie de peinture pouvant être obturée par une aiguille, un dispositif de commande étant conçue, pour cela, plus particulièrement comme un dispositif de transmission de mouvement et de force, avec lequel un mouvement d'une détente de l'unité de commande peut provoquer un mouvement de l'aiguille, le dispositif de transmission de mouvement et de force comprenant plus particulièrement un dispositif de traction, de préférence un câble de traction ou un câble Bowden qui est réglable de préférence en longueur, le mécanisme de transmission de mouvement et de force comprenant plus particulièrement également un levier auquel le dispositif de traction, plus particulièrement le câble de traction ou le câble Bowden, est accroché et qui est relié de manière pivotante à la tête de pulvérisation.

3. Appareil de pulvérisation de peinture transportable selon la revendication 1 ou 2, **caractérisé en ce que** l'unité de commande est dimensionnée de façon à ce que, lors d'un actionnement complet d'une détente de l'unité de commande, la tête de pulvérisation est d'abord actionnée et ouverte pour une sortie de la peinture puis au moins une des unités de travail de l'unité d'entraînement est démarrée.

4. Appareil de pulvérisation de peinture transportable selon la revendication 1 ou 2, **caractérisé en ce que**, lors du relâchement d'une détente entièrement actionnée de l'unité de commande, l'au moins une unité de travail de l'unité d'entraînement est d'abord arrêtée puis la tête de pulvérisation est fermée pour la sortie de peinture.

5. Appareil de pulvérisation de peinture transportable selon l'une des revendications précédentes, **caractérisé en ce que** la conduite d'air et la conduite de peinture, qui relient la lance avec les unités de travail de la station de base, sont reliées entre elles, la conduite de peinture étant guidée le long de la conduite d'air de façon à ce que la conduite de peinture puisse être coulissée par rapport à la conduite d'air, des moyens de guidage étant conçus plus particulièrement comme des pinces qui enveloppent la conduite d'air afin de l'empêcher de coulisser, la conduite d'air présentant, plus particulièrement dans la direction longitudinale, de manière alternée, des petits et grands diamètres extérieurs et les pinces s'appuyant contre au moins un grand diamètre extérieur afin d'empêcher un coulissement dans la direction longitudinale.

6. Appareil de pulvérisation de peinture transportable selon l'une des revendications précédentes, **caractérisé en ce que** la conduite de peinture et le tuyau de commande sont conçus, entre la lance et la station de base, comme un double tuyau d'une seule pièce, la conduite de peinture et le tuyau de commande présentant plus particulièrement différents diamètres intérieurs et le tuyau de commande étant guidé le long de la conduite d'air à l'aide de la conduite de peinture reliée avec lui.

7. Appareil de pulvérisation de peinture transportable selon l'une des revendications précédentes, **caractérisé en ce que** la première unité de travail est conçue pour la production d'un flux d'air en tant que ventilateur qui aspire l'air environnant à travers un filtre à air et le transporte à travers le tuyau d'air et la lance jusqu'à la tête de pulvérisation, **en ce que** la deuxième unité de travail pour la production d'un flux de peinture est conçue comme une pompe, plus particulièrement comme une pompe à tuyau et **en ce que** l'unité de contrôle, pour le contrôle ou la régulation de la première unité de travail et de la deuxième unité de travail, comprend plus particulièrement un sélecteur pour un débit de la pompe à tuyau et plus particulièrement un sélecteur pour des modes de fonctionnement, de préférence un mode de pulvérisation et un mode nettoyage, le ventilateur étant désactivé dans un mode de nettoyage et la pompe est exclusivement en fonctionnement, plus particulièrement avec une puissance élevée.

8. Appareil de pulvérisation de peinture transportable selon l'une des revendications précédentes, **caractérisé en ce que** la station de base de l'appareil de pulvérisation de peinture comprend un bac d'égouttement dans lequel la lance est réglable avec sa tête de pulvérisation et **en ce que** le bac d'égouttement peut être retiré pour le nettoyage de la station de base.

9. Appareil de pulvérisation de peinture transportable selon l'une des revendications précédentes, **caractérisé en ce que** la station de base de l'appareil de pulvérisation de peinture est constituée d'un corps de socle et d'un pylône, les unités de travail étant logées dans le corps de socle, le pylône comprenant une plate-forme se trouvant à une certaine distance au-dessus du corps de socle et plus particulièrement deux étançons, les étançons supportant la plate-forme et étant reliés avec le corps de socle, la plate-forme comprenant une pince de maintien pour la lance, la pince de maintien étant articulée sur la plate-forme, de préférence de manière pivotante autour d'un axe horizontal et la pince de maintien comprenant plus particulièrement un premier moyen de couplage, le premier moyen de couplage étant conçu de préférence comme un alésage, le premier moyen de couplage pouvant être couplé avec un deuxième moyen de couplage, le deuxième moyen de couplage étant disposé sur lance ou correspondant à la lance et étant conçu plus particulièrement comme une tige et la lance se trouvant, lorsqu'elle est saisie par la pince de maintien, avec sa tête de pulvérisation plus particulièrement dans le bac d'égouttement.

10. Appareil de pulvérisation de peinture transportable selon la revendication 9, **caractérisé en ce qu'**au moins un sélecteur de l'unité de contrôle est disposé dans la plate-forme.

11. Appareil de pulvérisation de peinture transportable selon l'une des revendications précédentes, **caractérisé en ce que** le tuyau de peinture, qui relie une sortie de peinture de la station de base avec une entrée de peinture de la tête de pulvérisation, est fixé aussi bien à la sortie de peinture de la station de base, avec une force de détente plus élevée, qu'à l'entrée de peinture de la tête de pulvérisation.

12. Appareil de pulvérisation de peinture transportable selon l'une des revendications précédentes, **caractérisé en ce qu'**un filtre à air est disposé plus particulièrement au niveau d'un côté supérieur d'un corps de socle de la station de base et est recouvert d'une grille de protection, plus particulièrement d'une seule pièce avec un bac d'égouttement.

13. Appareil de pulvérisation de peinture transportable selon l'une des revendications précédentes, **caractérisé en ce que** le volume du flux d'air et la pression d'air au niveau de la tête de pulvérisation correspondent aux valeurs limites HVLP et plus particulièrement une pression d'env. 10 psi (env.0,7 bar) n'est pas dépassée.

14. Appareil de pulvérisation de peinture transportable selon l'une des revendications précédentes, **caractérisé en ce que** la première unité de travail peut être contrôlée pour la production d'un flux d'air, plus particulièrement peut être régulée pour modifier le débit d'air.

15. Appareil de pulvérisation de peinture transportable selon la revendication 14, **caractérisé en ce que** le contrôle ou la régulation du débit d'air peut être effectué par pas prédéterminés, plus particulièrement à l'aide de programmes et/ou de manière continue, de préférence un contrôle ou une régulation, qui en résulte, de la deuxième unité de travail, étant prévue, plus particulièrement par l'intermédiaire de l'unité de contrôle.
